# FASCICULE DE BREVET EUROPEEN

(11) **EP 1 412 213 B1**
(45) Date de publication et mention de la délivrance du brevet: **05.04.2006**
(21) Numéro de dépôt: 02794617.7
(22) Date de dépôt: 31.07.2002
(51) Int. Cl.: B60J 7/14, B60J 7/20

(54) **VEHICULE DECOUVRABLE A TOIT REPLIABLE**
KABRIOLETT MIT VERSENKBAREM DACH
CONVERTIBLE VEHICLE WITH RETRACTABLE ROOF

(30) Priorité: 01.08.2001 FR 0110348
(43) Date de publication de la demande: 28.04.2004
(73) Titulaire: Société Européenne des Brevets Automobile - SEBA, 75011 Paris (FR)
(72) Inventeur: QUEVEAU, Gérard, F-79140 Cerizay (FR); QUEVEAU, Paul, F-79140 Cerizay (FR); GUILLEZ, Jean-Marc, F-79140 Cerizay (FR)
(74) Mandataire: Pichat, Thierry
(86) Numéro de dépôt international: PCT/FR2002/002766
(87) Numéro de publication internationale: WO 2003/013889

(56) Documents cités:
- EP-A- 1 092 580
- DE-A- 19 712 967
- DE-A- 19 834 850
- US-A- 5 584 522

## Description

La présente invention concerne un véhicule découvrable comportant un toit rigide repliable qui peut être placé en position repliée à l'intérieur du coffre arrière dudit véhicule.

On connaît un véhicule découvrable à toit rigide repliable comprenant au moins une partie de toit avant et une partie de toit arrière, la partie de toit arrière étant monté de manière pivotante selon un axe de pivotement transversal sur la carrosserie du véhicule, la partie de toit avant étant montée de manière pivotante de chaque côté du véhicule à une extrémité d'un bras de levier articulé à son autre extrémité sur la carrosserie du véhicule, et étant à son extrémité arrière articulée à l'extrémité avant de la partie de toit arrière, de sorte que, dans la position repliée du toit dans le coffre arrière du véhicule, la partie de toit avant se trouve dans une position sensiblement horizontale au dessus de la partie de toit arrière, ce véhicule comportant dans la partie supérieure avant du coffre arrière une poutre de raidissement transversale supérieure pour raidir la carrosserie.

Un tel véhicule est connu notamment d'après le DE-A-19 834 850.

Dans la position repliée d'un tel toit repliable dans le coffre arrière du véhicule, la partie de toit arrière a sa concavité tournée vers le haut tandis que la partie de toit avant a sa concavité tournée vers la bas, de sorte que ces deux parties occupent un volume important à l'intérieur du coffre arrière qui ne comprend plus qu'un volume très limité réservé à des bagages.

Un autre véhicule avec un toit rigide repliable est connu du document US 5 584 522, divulgant les caractéristiques du préambule de la revendication 1.

Le but de la présente invention est de remédier aux inconvénients ci-dessus d'un tel véhicule à toit rigide repliable, et de proposer un véhicule à toit rigide repliable du type précité dont le toit en position repliée n'occupe qu'un volume réduit à l'arrière du véhicule pour laisser un volume aussi grand que possible à la disposition des usagers du véhicule, de façon par exemple à permettre l'aménagement d'un volume accessible depuis l'intérieur du véhicule.

Suivant la présente invention, le véhicule comporte une paroi de fond ayant en coupe longitudinale une forme générale de C, située en avant de ladite première surface courbe avant, et s'étendant depuis ladite région inférieure avant, d'abord vers l'arrière, puis vers le haut, puis au moins partiellement vers l'avant jusqu'à prendre appui sur une poutre de raidissement transversale supérieure située dans une partie supérieure avant du coffre-arrière, la paroi de fond s'étendant entre deux parois latérales auxquelles elle est fixée pour former un réceptacle délimitant vers le fond et vers l'arrière, d'une part, latéralement, d'autre part, un premier volume central utile faisant partie dudit premier volume central avant.

Ce réceptacle délimite un premier volume central utile parfaitement isolé du toit en position repliée et des espaces parcourus par la partie de toit arrière pendant les mouvements du toit arrière entre sa position déployée, au-dessus de l'habitacle du véhicule, et sa position repliée à l'intérieur du coffre arrière.

Ce premier volume central utile peut donc contenir des objets délicats tels que vêtements, petits bagages, et peut être facilement accessible depuis l'habitacle, soit par le haut, soit par l'avant en rabattant vers l'avant le dossier d'au moins un siège dont la paroi arrière forme ledit réceptacle.

On a ainsi tiré un parti maximum de la forme et de la concavité de la partie de toit arrière dans un plan transversal pour aménager un premier volume central avant, et de la forme et de la concavité de cette même partie de toit arrière dans un plan longitudinal pour limiter autant que possible le volume de l'espace compris entre la première et la seconde surfaces courbes.

D'autres particularités et avantages de la présente invention apparaîtront dans la description détaillés ci-après d'un toit rigide repliable comprenant deux parties.

Aux dessins annexés donnés uniquement à titre d'exemples non limitatifs :
- La figure 1 est une vue partielle schématique en coupe longitudinale d'un véhicule selon un mode de réalisation de la présente invention, le toit repliable étant représenté à la fois dans sa position déployée au-dessus de l'habitacle et dans sa position repliée à l'arrière du véhicule ;
- la figure 2 est une vue semblable à la figure 1 représentant le toit repliable dans sa position déployée au-dessus de l'habitacle ;
- la figure 3 est une vue semblable à la Figure 1 représentant le toit repliable dans sa position repliée dans le coffre arrière du véhicule ;
- la figure 4 est une vue schématique partielle semblable à la figure 1 représentant un véhicule selon un autre mode de réalisation de la présente invention.;
- la figure 5 est une vue schématique partielle d'un détail de la figure 4 selon une variante de réalisation de la présente invention.
- La figure 6 est une vue schématique selon VI-VI à la figure 5 ;
- la figure 7 est une vue schématique en perspective depuis l'avant et le haut du dispositif schématisé à la figure 5.

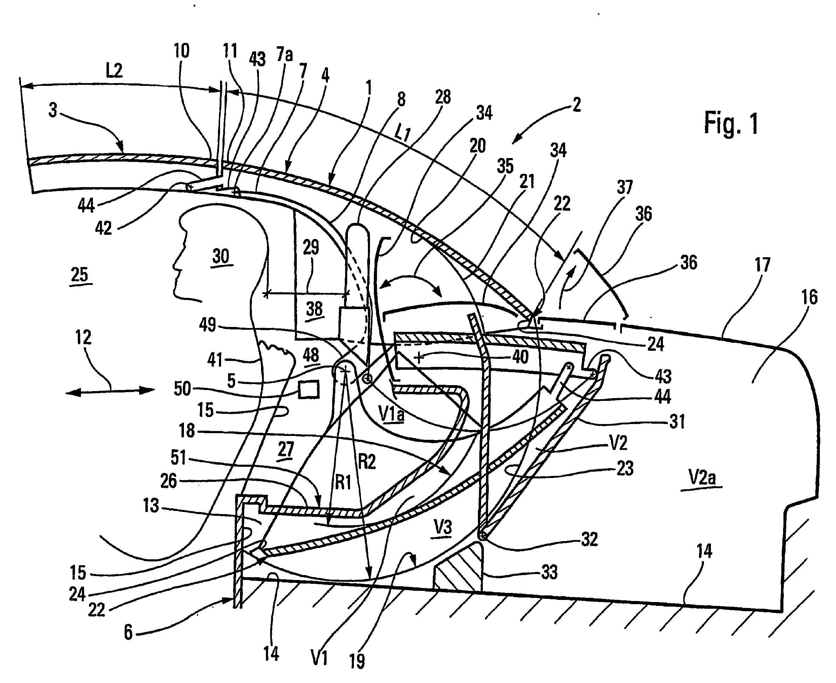

Dans le mode de réalisation représenté aux Figures 1 à 3, le toit rigide repliable 1 pour un véhicule découvrable 2 comprend une partie de toit avant 3 et une partie de toit arrière 4. La partie de toit arrière 4 est montée de manière pivotante sur la carrosserie 6 du véhicule en deux points opposés transversalement situés sur un même axe de pivotement transversal 5. La partie de toit avant 3 est montée de manière pivotante de chaque côté du véhicule en un point d'articulation 7a situé à une première extrémité 7 d'un bras de levier 8 articulé à son autre extrémité 9 en un point d'articulation 9a sur la carrosserie 6 du véhicule 2.

La partie de toit avant 3 est à son extrémité arrière 10 articulée à l'extrémité avant 11 de la partie de toit arrière 4.

Ainsi, les deux bras de levier 8 et la partie de toit arrière 4, qui sont articulés sur la carrosserie 6 du véhicule, constituent avec cette dernière et la partie de toit avant 3 un quadrilatère déformable qui maintient la partie de toit avant 3 sensiblement horizontale lors du pivotement du toit 1 dans un sens ou dans l'autre, sa concavité restant tournée vers le bas.

Ainsi, dans la position repliée du toit 1 dans le coffre arrière 16 du véhicule 2, la partie de toit avant 3 se trouve dans une position sensiblement horizontale au-dessus de la partie de toit arrière 4.

Dans cette position repliée, et comme indiqué plus haut, la concavité de la partie de toit arrière 4 est tournée vers le haut, tandis que la concavité de la partie de toit avant 3 est tournée vers le bas.

Le véhicule 2 comporte en outre, dans la région supérieure avant 48 du coffre arrière 16, une poutre de raidissement transversale supérieure, schématisée en 50, pour raidir la carrosserie 6 du véhicule 2 au droit de cette région 48. La poutre transversale supérieure 50 a une forme et une structure appropriées quelconques.

Ainsi dans la position repliée du toit rigide repliable selon la présente invention, la partie de toit arrière 4 occupe dans le coffre arrière 16 du véhicule une position inclinée prédéterminée utilisant au maximum la hauteur disponible entre le fond 14 et le capot 17 du coffre 16 tout en étant la plus avancée possible jusqu'à la région 13 précitée au fond et à l'avant dudit coffre arrière 16.

Suivant la présente invention, la longueur L1, dans la direction longitudinale du véhicule 2 représentée par la flèche 12, de la partie de toit arrière 4 est notablement plus grande que la longueur L2 de la partie de toit avant 3. Ces longueurs L1 et L2 peuvent être des longueurs courbes, comme représenté à la Figure 1. Elles pourraient bien entendu être des longueurs rectilignes obtenues par projection des longueurs courbes précitées sur un axe parallèle à la direction longitudinale 12 du véhicule

En outre, l'axe de pivotement transversal 5 de la partie de toit arrière 4 est disposé sur la carrosserie 6 du véhicule d'une manière prédéterminée en fonction de la longueur L1 de la partie de toit arrière 4 et en fonction de la position du dossier 41 dont la surface arrière 15 constitue la paroi avant 15 qui limite vers l'avant l'espace disponible dans le coffre arrière 16 du véhicule.

Ces deux caractéristiques sont définies de façon telles que, dans sa position repliée dans le coffre arrière 16 du véhicule 2, la partie de toit arrière 4 occupe une position inclinée partant de la région inférieure avant 13 située au niveau du fond 14 du coffre arrière 16, à l'avant dudit coffre 16, et s'étendant sensiblement vers l'arrière et vers le haut.

De cette manière, il apparaît que la partie de toit arrière 4 balaie pendant son pivotement un volume V3 compris entre une première surface courbe avant 18 et une seconde surface courbe arrière 19 qui limitent respectivement dans l'habitacle et dans le coffre arrière, en avant de la surface avant 18, un premier volume central avant V1 pouvant être accessible de l'intérieur du véhicule, et, à l'arrière de la surface arrière 19, un second volume arrière V2 pouvant être accessible de l'extérieur par l'arrière du véhicule.

Dans l'exemple représenté, la première surface courbe avant 18 est la surface engendrée par la coupe transversale de la partie de toit arrière 4 au droit du point 20 de ladite partie de toit arrière située à la distance la plus courte de l'axe de pivotement transversal 5 de ladite partie de toit arrière 4.

La première surface courbe avant 18 coupe le plan de symétrie longitudinal vertical du véhicule, qui est le plan des figures 1 à 4, selon le cercle 21, de rayon R1, engendré par le point 20 lors du pivotement de la partie de toit arrière 4 dans un sens ou dans l'autre autour de l'axe 5.

Comme la partie de toit arrière 4, la première surface courbe avant 18 comporte une partie centrale engendrée par la partie centrale sensiblement plate de la partie de toit arrière 4, et deux parties latérales engendrées par les parties latérales, à rayon relativement petit, de ladite partie de toit arrière 4, ainsi que par les custodes ou montants latéraux 49 qui pivotent autour de l'axe transversal 5.

La seconde surface courbe arrière 19 est engendrée par le bord arrière 22 de la partie de toit arrière 4 et coupe le plan de symétrie longitudinal vertical, qui est le plan des figures 1 à 4, selon le cercle 23, de rayon R2, engendré par le point milieu 24 dudit bord arrière 22.

Le volume V3 balayé par la partie de toit arrière 4 pendant son pivotement dans un sens ou dans l'autre, et compris entre les surfaces 18 et 19, dépend de la forme et de l'orientation de la partie de toit arrière 4.

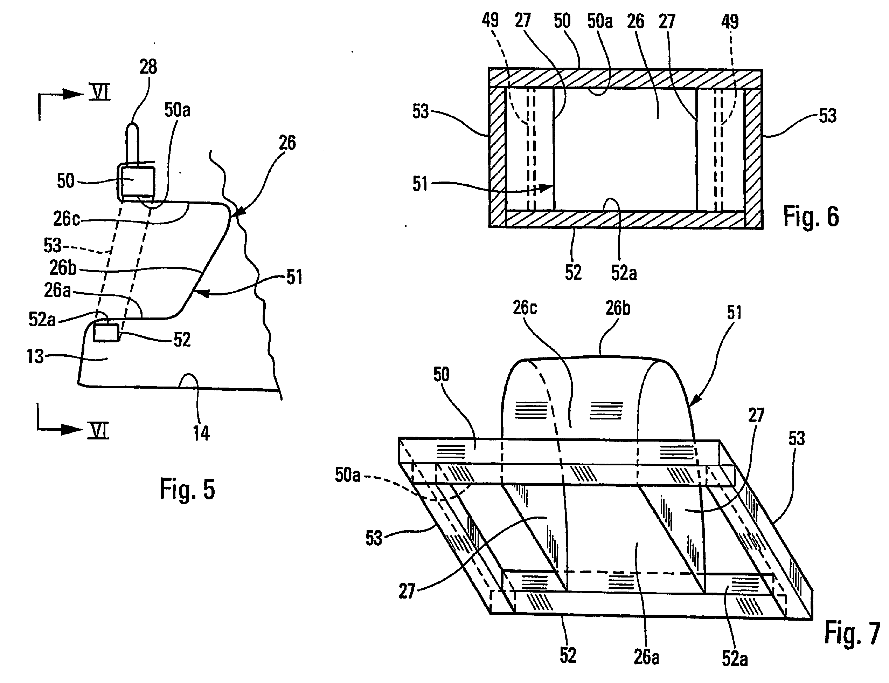

Du fait de la forme de la surface 18, le premier volume central V1 peut s'etendre transversalement sur une partie importante de la largeur de l'habitacle 25 du véhicule, à l'exception des zones proches des parois latérales dudit habitacle. (Voir figures 6 et7).

Il est ainsi possible de ménager une paroi de fond 26 et deux parois latérales 27 délimitant un premier volume utile de rangement central V1a accessible depuis l'habitacle et isolé du volume V3 balayé par la partie de toit arrière 4 lors de son pivotement, ce volume V1a faisant partie du premier volume central V1.

L'extrémité supérieure de la paroi de fond 26 se prolonge au moins partiellement vers l'avant par une partie de paroi sensiblement horizontale complémentaire, schématisée en 26c, adaptée à isoler le volume utile V1a de l'arrière du véhicule, et à prendre appui sur la poutre de raidissement transversale supérieure 50.

Du fait de la différence entre les longueurs L1 et L2 précitées, la partie de toit avant 3 ne recouvre, dans sa position repliée, qu'une partie arrière du volume central utile V1a dont l'avant reste libre pour un accès facile et des aménagements complémentaires.

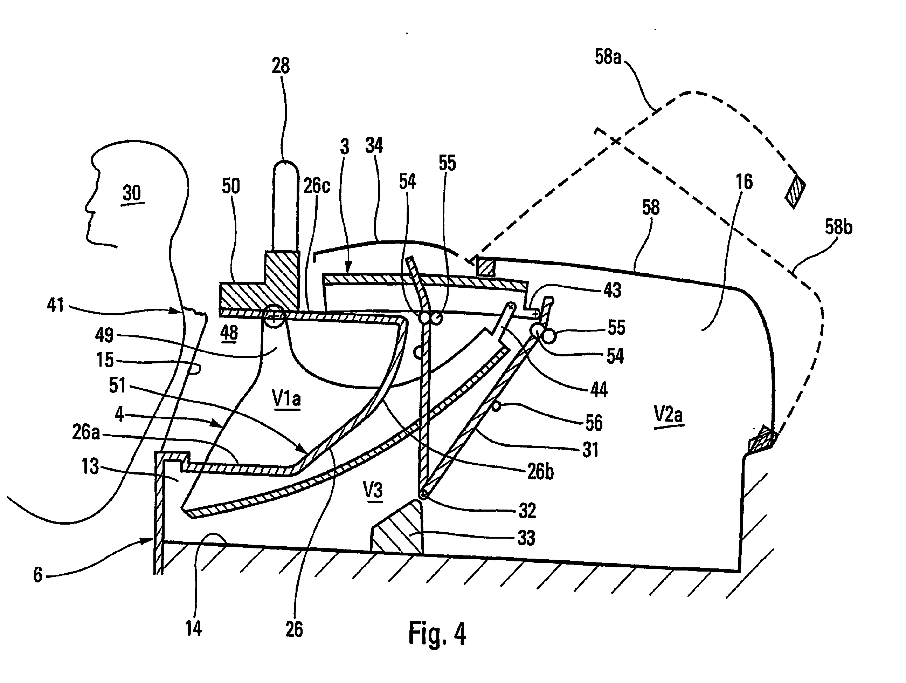

Dans le mode de réalisation des figures 4 à 7, le véhicule 2 comporte une paroi de fond 26 ayant en coupe longitudinale une forme générale de C, située en avant de ladite première surface courbe avant 18, et s'étendant depuis ladite région inférieure avant 13, d'abord vers l'arrière, puis vers le haut, puis au moins partiellement vers l'avant jusqu'à prendre appui sur ladite poutre de raidissement supérieure avant 50, selon trois tronçons successifs respectivement inférieur 26a, arrière 26b et supérieur 26c, la paroi 26 s'ouvrant vers l'avant.

La paroi de fond 26 s'étend entre deux parois latérales 27 auxquelles elle est fixée pour former un réceptacle 51 accessible depuis l'habitacle 25 et délimitant respectivement vers le fond et vers l'arrière, d'une part, latéralement, d'autre part, le premier volume central utile V1a faisant partie dudit premier volume central V1.

Comme schématisé aux figures 6 et 7, la poutre de raidissement supérieure avant 50, qui a une forme et une structure appropriées quelconques, coopère avec des moyens de structure appropriés quelconques de la carrosserie 6 constituant respectivement une poutre de raidissement transversale inférieure avant, schématisée en 52, et deux montants latéraux de raidissement, schématisés en 53, pour former un assemblage de raidissement de la carrosserie 6 en forme de quadrilatère 57.

Les parois 26 et 27 du réceptacle 51 sont fixées respectivement à la poutre supérieure 50 et à la poutre inférieure 52 et participent à communiquer au quadrilatère 57 et à la carrosserie 6 du véhicule une rigidité et une résistance à la déformation et à la torsion très recherchées dans les véhicules découvrables.

A cet effet, et comme représenté sur les figures 5 à 7, la paroi de fond 26 est fixée d'une manière quelconque au moins sur la face inférieure 50a de la poutre supérieure 50 et au moins sur la face supérieure 52a de la poutre inférieure 52.

Comme représenté aux Figures, des moyens 28 formant arceau de sécurité sont placés immédiatement en avant de l'emplacement occupé par la partie de toit avant 3 dans sa position repliée à l'intérieur du coffre arrière 16 du véhicule et sont fixés à la poutre de raidissement transversale supérieure 50 (voir figures 1, 3 et 4)

Ces moyens formant arceau de sécurité sont des moyens connus quelconques, et peuvent être constitués, par exemple, soit par un arceau unique, soit par deux arceaux situés respectivement derrière chacun des sièges des passagers, ces arceaux pouvant être fixes ou déformables.

Il reste ainsi un espace, schématisé en 29, entre les moyens formant arceau 28 et la tête, schématisée en 30, d'un-passager, permettant l'accès au premier volume central V1a à l'intérieur du réceptacle 51 depuis l'intérieur de l'habitacle 25.

L'accès à l'intérieur du réceptacle 51 est également possible par l'avant, par exemple en rabattant vers l'avant le dossier 41 de l'un au moins des sièges en avant du coffre arrière 16.

Dans l'exemple représenté aux figures 1 à 4, le véhicule 2 comporte un panneau transversal, schématisé en 31, limitant vers l'avant un second volume arrière utile V2a disponible pour recevoir des bagages à l'intérieur du coffre arrière 16 et faisant partie du second volume V2.

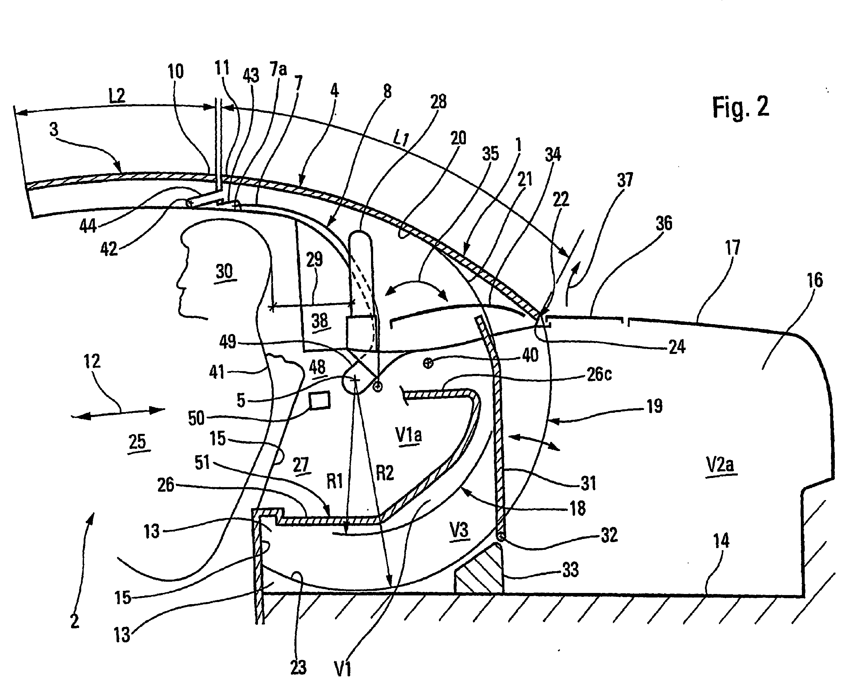

Le panneau transversal 31 est de préférence mobile entre une première position vers l'avant, schématisée aux figures 1 et 2, lorsque le toit repliable 1 est dans sa position déployée au-dessus de l'habitacle 25, et une seconde position vers l'arrière, schématisée aux figures 1, 3 et 4, lorsque le toit 1 est dans sa position repliée à l'intérieur du coffre arrière 16.

Dans cet exemple, le panneau transversal 31 est monté de manière pivotante autour d'un second axe de pivotement transversal 32 situé à proximité du fond 14 du coffre arrière 16, par exemple sur un support transversal 33 fixé sur le fond 14 en arrière de la seconde surface courbe arrière 19.

Dans l'exemple représenté, le panneau 31 a dans sa position avant une position proche de la verticale et sensiblement tangente par l'arrière à la paroi 26, et dans sa position arrière une position inclinée aussi proche que possible des deux parties de toit avant 3 et arrière 4 dans leur position repliée.

Dans le mode de réalisation de la figure 4, le véhicule 2 comporte des moyens de verrouillage complémentaires schématisés en 54 et 55 et portés respectivement par le panneau 31 et par la carrosserie 6 pour verrouiller le panneau transversal 31 à la carrosserie 6 du véhicule et l'immobiliser dans la première position vers l'avant et dans la seconde position vers l'arrière dudit panneau 31.

Ces moyens de verrouillage 54 et 55 sont des moyens connus quelconques, et sont par exemple constitués par des doigts 54 ou 55 mobiles adaptés à coopérer avec des gaches correspondantes 55 ou 54.

Dans ce même mode de réalisation, le véhicule 2 comporte des capteurs schématisés en 56 et adaptés à détecter la présence du panneau transversal 31 dans sa première position ou dans sa seconde position.

De tels capteurs 56, d'un type connu quelconque, sont intégrés dans un circuit logique de commande des mouvements successifs du capot 17, de la tablette 34, du panneau 31 et des éléments de toit 3 et 4, de façon à confirmer ou à infirmer un ordre de déplacement des éléments de toit 3 et 4 dans un sens ou dans l' autre si les autres organes mobiles sont ou ne sont pas dans la position adequate.

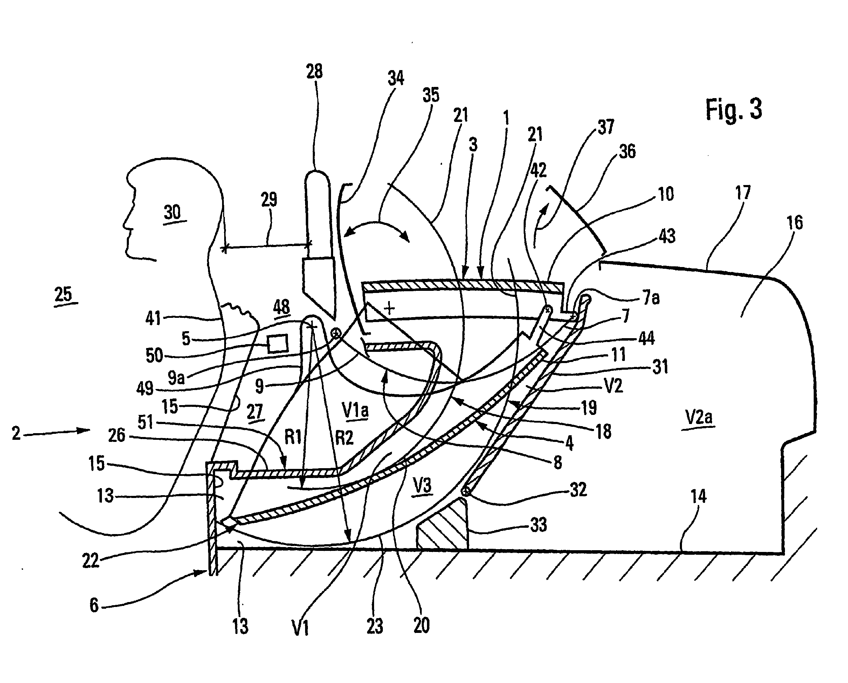

On voit aux figures que le véhicule 2 comporte une tablette 34 mobile entre une position normale sensiblement horizontale, schématisée aux figures 1 et 2, et une position levée sensiblement verticale, schématisée aux figures 1 et 3, et permettant le pivotement du toit repliable 1 dans un sens ou dans l'autre, comme schématisé par la flèche 35.

La tablette 34 pourrait par exemple être montée pivotante autour de points de pivotement latéraux situés sur un même troisième axe de pivotement transversal 40.

En variante, la tablette 34 pourrait être montée pivotante sur deux bras pivotants disposés de chaque côté du véhicule (non représentés).

Pour permettre le pivotement des deux parties de toit avant et arrière 3 et 4, le système 1 comporte, à l'avant du capot 17 du coffre arrière 16, un volet transversal 36 adapté à pivoter de l'avant vers l'arrière, comme schématisé par la flèche 37, pour laisser passer l'extrémité avant 11 de la partie de toit arrière 4 et l'extrémité arrière 10 de la partie de toit avant 3. Ce volet est ensuite refermé.

Dans le mode de réalisation de la figure 4, le capot 58 du coffre arrière est en une seule pièce, et le véhicule comprend des moyens pour ouvrir ce capot 58 de l'arrière vers l'avant, dans sa position 58a, pour le chargement de bagages, ou de l'avant vers l'arrière, dans sa position 58b, pour le passage du toit 1 replié vers le coffre arrière 16.

Ces moyens sont par exemple ceux décrits dans le FR-B-2 77 241.

Dans l'exemple représenté aux figures 1 à 3, la partie de toit arrière 4 porte de chaque côté du véhicule une vitre latérale fixe 38 de custode qui peut pivoter avec ladite partie de toit arrière 4.

Une telle vitre 38 permet ainsi d'augmenter la surface vitrée latérale du véhicule, sans l'inconvénient rencontré dans les toits repliables de l'art antérieur, dans lesquels de telles vitres doivent être mobiles verticalement et être baissées avant de faire pivoter le toit découvrable vers sa position repliée, puis relevées après le pivotement du toit repliable vers sa position déployée.

Dans l'exemple représenté aux figures, le point d'articulation 9a de chaque bras de levier 8 sur la carrosserie 6 du véhicule 2 est situé en arrière de l'axe de pivotement transversal 5 de la partie de toit arrière 4. En outre, le point d'articulation 7a de chaque bras de levier 8 sur l'extrémité arrière 10 de la partie de toit avant 3 est situé, dans la position déployée du système de toit 1, en arrière des points d'articulation 42 de la partie de toit avant 3 à l'extrémité avant 11 de la partie de toit arrière 4.

A cet effet, le point d'articulation 7a de chaque levier 8 est porté par une première patte correspondante 43 s'étendant vers l'arrière à partir de l'extrémité arrière 10 de la partie de toit avant 3.

En outre, chaque point d'articulation 42 est porté par une seconde patte correspondante 44 s'étendant vers l'avant à partir de l'extrémité avant 11 de la partie de toit arrière 4.

Bien entendu, la présente invention n'est pas limitée aux modes de réalisation que l'on vient de décrire, et on peut apporter à ceux-ci de nombreux changements et modifications sans sortir du domaine de l'invention, comme définie par les revendications suivantes.

## Revendications

1. Véhicule découvrable (2) à toit rigide repliable (1), ce véhicule (2) comprenant une partie de toit avant (3) et une partie de toit arrière (4), la partie de toit arrière (4) étant montée de manière pivotante sur la carrosserie (6) du véhicule (2) selon un axe de pivotement transversal (5), la partie de toit avant (3) étant montée de manière pivotante, de chaque côté du véhicule (2), à une extrémité (7) d'un bras de levier (8) articulé à son autre extrémité (9) sur la carrosserie (6) du véhicule, et étant à son extrémité arrière (10) articulée à l'extrémité avant (11) de la partie de toit arrière (4), de sorte que, dans la position repliée du système de toit (1) dans un coffre arrière (16) du véhicule (2), la partie de toit avant (3) se trouve dans une position sensiblement horizontale au-dessus de la partie de toit arrière (4), la longueur (L1) en direction longitudinale (12) de la partie de toit arrière (4) étant notablement plus grande que celle (L2)de la partie de toit avant (3) de façon telle, et l'axe transversal (5) de pivotement de la partie de toit arrière (4) étant disposé de façon telle, que, dans sa position repliée dans le coffre arrière (16) du véhicule (2), la partie de toit arrière (4) occupe une position inclinée partant de la région inférieure avant (13) située au niveau du fond (14) du coffre arrière (16), à l'avant dudit coffre, et s'étendant sensiblement vers l'arrière et vers le haut, ladite partie de toit arrière (4) balayant pendant son pivotement un volume (V3) compris entre une première surface courbe avant (18) et une seconde surface courbe arrière (19) qui limitent respectivement dans l'habitacle (25) et dans le coffre arrière (16) un premier volume central avant (V1) pouvant être accessible de l'intérieur du véhicule (2) et un second volume arrière (V2) pouvant être accessible de l'extérieur par l'arrière du véhicule (2), **caractérisé en ce que** le véhicule comporte une paroi de fond (26) ayant en coupe longitudinale une forme générale de C, située en avant de ladite première surface courbe avant (18), et s'étendant depuis la dite région inférieure avant (13), d'abord vers l'arrière, puis vers le haut, puis au moins partiellement vers l'avant jusqu'à prendre appui sur une poutre de raidissement transversale supérieure (50) située dans une partie supérieure avant de coffre arrière (16), la paroi de fond (26) s'étendant entre deux parois latérales (27) auxquelles elle est fixée pour former un réceptacle (51) délimitant respectivement vers le fond et vers l'arrière, d'une part, latéralement, d'autre part, un premier volume central utile (V1a) faisant partie dudit premier volume central (V1).

2. Véhicule à toit rigide repliable selon la revendication 1, **caractérisé en ce que** des moyens formant arceau de sécurité (28) sont placés immédiatement en avant de l'emplacement occupé par la partie de toit avant (3) dans sa position repliée dans le coffre arrière (16) du véhicule, et sont fixés à ladite poutre de raidissement supérieure (50).

3. Véhicule à toit rigide repliable selon l'une quelconque des revendications précédentes, **caractérisé en ce qu'**il comporte un panneau transversal (31) limitant vers l'avant un second volume arrière utile (V2a) disponible pour recevoir des bagages à l'intérieur du coffre arrière (16) et faisant partie dudit second volume arrière (V2), ce panneau transversal (31) étant de préférence mobile entre une première position vers l'avant lorsque le toit repliable (1) est dans sa position déployée au-dessus de l'habitacle (25), et une seconde position vers l'arrière lorsque le toit (1) est dans sa position repliée dans le coffre arrière (16) du véhicule (2).

4. Véhicule à toit rigide repliable selon la revendication 3, **caractérisé en ce que** le panneau transversal (31) est monté de manière pivotante autour d'un axe de pivotement transversal (32) situé à proximité du fond (14) du coffre arrière (16)

5. Véhicule à toit rigide repliable selon la revendication 3 ou 4, **caractérisé en ce qu'**il comporte des moyens de verrouillage (54, 55) pour verrouiller le panneau transversal (31) à la carrosserie du véhicule dans la première position vers l'avant et dans la seconde position vers l'arrière dudit panneau (31)

6. Véhicule à toit rigide repliable selon l'une quelconque des revendications 3 à 5, **caractérisé en ce qu'**il comporte des capteurs (56) adaptés à détecter la présence du panneau transversal (31) dans sa première position ou dans sa seconde position.

7. Véhicule à toit rigide repliable selon l'une quelconque des revendications précédentes, **caractérisé en ce que** la partie de toit arrière (4) porte de chaque côté une vitre latérale fixe de custode (38).

8. Véhicule à toit rigide repliable selon l'une quelconque des revendications précédentes, **caractérisé en ce qu'**il comporte une tablette (34) mobile entre une position normale sensiblement horizontale et une position levée sensiblement verticale permettant le pivotement du toit repliable (1) dans un sens ou dans l'autre.

9. Véhicule à toit rigide repliable selon l'une quelconque des revendications précédentes, **caractérisé en ce que** le point d'articulation (9a) de chaque bras de levier (8) sur la carrosserie (6) du véhicule (2) est situé en arrière de l'axe de pivotement transversal (5) de la partie de toit arrière (4), et **en ce que** le point d'articulation (7a) de chaque bras de levier (8) sur l'extrémité arrière (10) de la partie de toit avant (3) est situé, dans la position déployée du toit (1), en arrière des points d'articulation (42) de la partie de toit avant (3) à l'extrémité avant (11) de la partie de toit arrière (4).

10. Véhicule à toit rigide repliable selon l'une quelconque des revendications précédentes, **caractérisé en qu'**il comporte, à l'avant du capot (17) du coffre arrière (16), un volet transversal (36) adapté à pivoter de l'avant vers l'arrière pour permettre le pivotement du toit rigide repliable (1) dans un sens ou dans l'autre.

11. Véhicule à toit rigide repliable selon l'une quelconque des revendications 1 à 9, **caractérisé en ce que** le capot (58) du coffre arrière (16) est en une seule pièce, et **en ce que** le véhicule (2) comprend des moyens pour ouvrir ledit capot (58) de l'arrière vers l'avant pour le chargement de bagages, ou de l'avant vers l'arrière pour le passage du toit replié vers le coffre arrière (16).

## Patentansprüche

1. Kabriolett (2) mit versenkbarem, starren Dach (1), wobei das Fahrzeug (2) ein vorderes Dachteil (3) und ein hinteres Dachteil (4) aufweist, wobei das hintere Dachteil (4) an der Karosserie (6) des Fahrzeugs (2) entlang einer quer verlaufenden Schwenkachse (5) verschwenkbar gelagert ist, wobei das vordere Dachteil (3) auf jeder Seite des Fahrzeugs (2) an einem Ende (7) eines Hebelarms (8) verschwenkbar gelagert ist, der mit seinem anderen Ende (9) an der Karosserie (6) des Fahrzeugs angelenkt ist, und mit seinem hinteren Ende (10) am vorderen Ende (11) des hinteren Dachteils (4) angelenkt ist, so dass in versenkter Stellung der Dacheinrichtung (1) in einem heckseitigen Kasten (16) des Fahrzeugs (2) das vordere Dachteil (3) sich in einer im wesentlichen horizontalen Stellung oberhalb des hinteren Dachteils (4) befindet, wobei die Länge (L1) in Längsrichtung (12) des hinteren Dachteils (4) derart ausgeprägt größer ist als die (L2) des vorderen Dachteils (3) und die quer verlaufende Schwenkachse (5) des hinteren Dachteils (4) derart angeordnet ist, dass in seiner im heckseitigen Kasten (16) des Fahrzeugs (2) versenkten Stellung das hintere Dachteil (4) eine geneigte Stellung ausgehend von dem unteren Vorderbereich (13) in Höhe des Bodens (14) des heckseitigen Kastens (16) vor dem Kasten einnimmt und im wesentlichen nach hinten und nach oben verläuft, wobei das hintere Dachteil (4) während seiner Schwenkbewegung einen Raum (V3) überstreicht, der zwischen einer ersten, vorderen Kurvenfläche (18) und einer zweiten, hinteren Kurvenfläche (19) vorhanden ist, welche im Fahrgastraum (25) bzw. im heckseitigen Kasten (16) einen ersten, vorderen Mittelraum (V1) begrenzen, der vom Inneren des Fahrzeugs (2) aus zugänglich sein kann, sowie einen zweiten, hinteren Raum (V2), der von außerhalb vom Heck des Fahrzeugs (2) aus zugänglich sein kann, **dadurch gekennzeichnet, dass** das Fahrzeug eine im Längsschnitt insgesamt C-förmige Bodenwand (26) aufweist, die sich vor der ersten, vorderen Kurvenfläche (18) befindet, und sich von dem unteren Vorderbereich (13) zunächst nach hinten, dann nach oben, dann zumindest teilweise nach vorne erstreckt, bis sie an einen oberen, quer verlaufenden Versteifungsbalken (50) in Anlage gelangt, der sich in einem oberen, vorderen Teil des heckseitigen Kastens (16) befindet, wobei die Bodenwand (26) sich zwischen zwei Seitenwänden (27) erstreckt, an denen sie befestigt ist, um einen Behälter (51) zu bilden, der einerseits zum Boden und zur Heckseite hin und andererseits seitlich einen ersten mittleren Nutzraum (V1a) begrenzt, der zu dem ersten Mittelraum (V1) gehört.

2. Fahrzeug mit versenkbarem, starren Dach nach Anspruch 1, **dadurch gekennzeichnet, dass** Mittel zum Bilden eines Überrollbügels (28) unmittelbar vor der Stelle positioniert sind, die von dem vorderen Dachteil (3) in seiner versenkten Stellung im heckseitigen Kasten (16) des Fahrzeugs eingenommen wird, und an dem oberen Versteifungsbalken (50) befestigt sind.

3. Fahrzeug mit versenkbarem, starren Dach nach einem der vorangehenden Ansprüche, **dadurch gekennzeichnet, dass** es eine Querplatte (31) aufweist, die nach vorne einen zweiten, hinteren Nutzraum (V2a) begrenzt, der zum Verstauen von Gepäck im Inneren des heckseitigen Kastens (16) zur Verfügung steht und zum zweiten, hinteren Raum (V2) gehört, wobei die Querplatte (31) vorzugsweise zwischen einer ersten Stellung nach vorne beweglich ist, wenn das versenkbare Dach (1) sich in seiner über den Fahrgastraum (25) ausgefahrenen Stellung befindet, und einer zweiten Stellung nach hinten beweglich ist, wenn das Dach (1) sich in seiner versenkten Stellung im heckseitigen Kasten (16) des Fahrzeugs (2) befindet.

4. Fahrzeug mit versenkbarem, starren Dach nach Anspruch 3, **dadurch gekennzeichnet, dass** die Querplatte (31) um eine quer verlaufende Schwenkachse (32) herum verschwenkbar gelagert ist, die sich in der Nähe des Bodens (14) des heckseitigen Kastens (16) befindet.

5. Fahrzeug mit versenkbarem, starren Dach nach Anspruch 3 oder 4, **dadurch gekennzeichnet, dass** es Verriegelungsmittel (54, 55) zum Verriegeln der Querplatte (31) mit der Fahrzeugkarosserie in einer ersten Stellung zur Vorderseite und in der zweiten Stellung zur Rückseite der Platte (31) hin aufweist.

6. Fahrzeug mit versenkbarem, starren Dach nach einem der Ansprüche 3 bis 5, **dadurch gekennzeichnet, dass** es Sensoren (56) aufweist, die darauf abgestimmt sind, das Vorhandensein der Querplatte (31) in ihrer ersten Stellung bzw. in ihrer zweiten Stellung zu erfassen.

7. Fahrzeug mit versenkbarem, starren Dach nach einem der vorangehenden Ansprüche, **dadurch gekennzeichnet, dass** das hintere Dachteil (4) auf jeder Seite eine feste hintere Seitenfensterscheibe (38) trägt.

8. Fahrzeug mit versenkbarem, starren Dach nach einem der vorangehenden Ansprüche, **dadurch gekennzeichnet, dass** es eine Abdeckung (34) aufweist, die zwischen einer im wesentlichen horizontalen, normalen Stellung und einer im wesentlichen senkrechten, angehobenen Stellung beweglich ist, wodurch das Verschwenken des versenkbaren Dachs (1) in der einen oder anderen Richtung möglich ist.

9. Fahrzeug mit versenkbarem, starren Dach nach einem der vorangehenden Ansprüche, **dadurch gekennzeichnet, dass** der Anlenkpunkt (9a) eines jeden Hebelarms (8) an der Karosserie (6) des Fahrzeugs (2) sich hinter der quer verlaufenden Schwenkachse (5) des hinteren Dachteils (4) befindet und dass in der ausgefahrenen Stellung des Dachs (1) der Anlenkpunkt (7a) eines jeden Hebelarms (8) an dem hinteren Ende (10) des vorderen Dachteils (3) sich hinter den Anlenkpunkten (42) des vorderen Dachteils (3) an dem vorderen Ende (11) des hinteren Dachteils (4) befindet.

10. Fahrzeug mit versenkbarem, starren Dach nach einem der vorangehenden Ansprüche, **dadurch gekennzeichnet, dass** es vor der Abdeckhaube (17) des heckseitigen Kastens (16) eine quer verlaufende Klappe (36) aufweist, die darauf abgestimmt ist, von vorne nach hinten zu schwenken, um das Verschwenken des versenkbaren, starren Dachs (1) in der einen oder anderen Richtung zu gestatten.

11. Fahrzeug mit versenkbarem, starren Dach nach einem der Ansprüche 1 bis 9, **dadurch gekennzeichnet, dass** die Abdeckhaube (58) des heckseitigen Kastens (16) aus einem Teil besteht und dass das Fahrzeug (2) Mittel zum Öffnen der Haube (58) von hinten nach vorne zum Einladen von Gepäckstücken bzw. von vorne nach hinten zum Überführen des versenkbaren Dachs in den Kofferraum (16) aufweist.

## Claims

1. A convertible vehicle (2) with a rigid folding roof (1), said vehicle (2) having a front roof portion (3) and a rear roof portion (4), the rear roof portion (4) being pivot-mounted on the body (6) of the vehicle (2) along a transverse pivot axis (5), the front roof portion (3) being pivot-mounted on each side of the vehicle (2) on one end (7) of a lever arm (8) which is articulated at its other end (9) to the body (6) of the vehicle, said front roof portion (3) being articulated at its rear end (10) to the front end (11) of the rear roof portion (4) in such a way that, when the roof system (1) is in its folded position in the rear boot (16) of the vehicle (2), the front roof portion (3) assumes a substantially horizontal position over the rear roof portion (4), said vehicle having in the upper front portion of the rear boot (16), an upper transverse stiffening beam (50), the length (L1) in longitudinal direction (12) of the rear roof portion (4) being appreciably greater than the length (L2) of the front roof portion (3) and the transverse pivot axis (5) of the rear roof portion (4) being disposed in such a way that, in its folded position in the rear boot (16) of the vehicle (2), the rear roof portion (4) assumes an inclined position proceeding from the lower front region (13) located on a level with the floor (14) of the rear boot (16), at the front of said boot, and extending substantially rearwards and upwards, said rear roof portion (4) sweeping, during its pivoting action, through a volume (V3) between a first front curved surface (18) and a second rear curved surface (19) which delimit, in the passenger compartment (25) and in the rear boot (16) respectively, a first central volume (V1) at the front which can be accessed from the interior of the vehicle (2) and a second volume (V2) at the rear which can be accessed from the exterior, i.e. from the rear of the vehicle (2), **characterized in that** the vehicle has a partition wall (26) at the bottom which has a generally C-shaped longitudinal section, is located in front of said first front curved surface (18) and extends from said front lower region (13), first rearwards, then upwards, then at least partly forwards until it rests on said upper stiffening beam (50), the bottom partition wall (26) extending between two side walls (27) to which it is fixed to form a receptacle (51) delimiting respectively downwards and rearwards on the one hand, and sideways on the other hand, a first useful central volume (V1a) forming part of said first central volume (V1).

2. A vehicle with a rigid folding roof according to Claim 1, **characterized in that** means forming a, roll-over bar (28) are placed immediately in front of the position occupied by the front roof portion (3) in its folded position in the rear boot (16) of the vehicle, and are fixed to said upper stiffening beam (50).

3. A vehicle with a rigid folding roof according to any one of the preceding claims, **characterized in that** it has a transverse panel (31) delimiting towards the front a second useful rear volume (V2a) available for accommodating luggage inside the rear boot (16) and forming part of said second rear volume (V2), said transverse panel (31) preferably being movable between a first forward position when the folding roof (1) is in its deployed position above the passenger compartment (25), and a second rearward position when the roof (1) is in its folded position in the rear boot (16) of the vehicle (2).

4. A vehicle with a rigid folding roof according to Claim 3, **characterized in that** the transverse panel (31) is pivot-mounted about a transverse pivot axis (32) located close to the floor (14) of the rear boot (16).

5. A vehicle with a rigid folding roof according to Claim 3 or 4, **characterized in that** it has locking means (54, 55) for locking the transverse panel (31) to the body of the vehicle in the first forward position and in the second rearward position of said panel (31).

6. A vehicle with a rigid folding roof according to any one of Claims 3 to 5, **characterized in that** it has sensors (56) adapted to detect the presence of the transverse panel (31) in its first position or in its second position.

7. A vehicle with a rigid folding roof according to any one of the preceding claims, **characterized in that** the rear roof portion (4) bears a fixed rear side panel window (38) on each side.

8. A vehicle with a rigid folding roof according to any one of the preceding claims, **characterized in that** it has a shelf (34) which is movable between a normal substantially horizontal position and a raised substantially vertical position enabling the folding roof (1) to pivot in one direction or the other.

9. A vehicle with a rigid folding roof according to any one of the preceding claims, **characterized in that** the point of articulation (9a) of each lever arm (8) on the body (6) of the vehicle (2) is located to the rear of the transverse pivot axis (5) of the rear roof portion (4), and **in that**, when the roof (1) is in its deployed position, the point of articulation (7a) of each lever arm (8) on the rear end (10) of the front roof portion (3) is located to the rear of the points of articulation (42) of the front roof portion (3) to the front end (11) of the rear roof portion (4).

10. A vehicle with a rigid folding roof according to any one of the preceding claims, **characterized in that it** has, at the front of the lid (17) of the rear boot (16), a transverse flap (36) adapted to pivot from the front towards the rear so as to enable the rigid folding roof (1) to pivot in one direction or the other.

11. A vehicle with a rigid folding roof according to any one of Claims 1 to 9, **characterized in that** the lid (58) of the rear boot (16) is made in a single piece, and **in that** the vehicle (2) has means for opening said lid (58) from the rear towards the front for loading luggage, or from the front towards the rear enabling the folded roof to move into the rear boot (16).
